# EUROPÄISCHE PATENTANMELDUNG

(11) **EP 1 621 079 A2**
(43) Veröffentlichungstag der Anmeldung: **01.02.2006**
(21) Anmeldenummer: 05450128.3
(22) Anmeldetag: 26.07.2005
(51) Int. Cl.: A22C 11/00, A22C 13/00, A23L 1/317, A23B 4/00, A23B 4/023, A23B 4/044, A23B 4/06

(54) **Verfahren zum Herstellen von zum Braten und/oder bzw. Grillen geeigneten Würstchen mit Speckmantel**

(30) Priorität: 27.07.2004 AT 12802004
(71) Anmelder: Gierlinger, Johann, 4040 Linz (AT)
(72) Erfinder: Gierlinger, Johann, 4040 Linz (AT)
(74) Vertreter: Hübscher, Helmut

(57) **Zusammenfassung**

Bei dem Verfahren zum Herstellen von zum Braten und/oder bzw. Grillen geeigneten Würstchen mit Speckmantel, insbesondere "Berner Würstchen", bei dem die aus in Wursthüllen eingefülltem Brät bestehenden Würstchen nach einer Vorbehandlung durch Räuchern, Erhitzung und Abkühlung einzeln mit in Streifen oder Scheiben geschnittenem, vorbehandeltem Speck umwickelt werden, wird die Wursthülle nach der die Würstchen in ihrer Form stabilisierenden Vorbehandlung vor dem Umwickeln entfernt und es wird für die Umwicklung Speck verwendet, der bei seiner Vorbehandlung z. B. mit Salzlake bzw. durch Tumbeln und Räuchern nur unter der Koagulationstemperatur des Eiweißes liegenden Temperaturen, insbesondere Temperaturen unter 40° C ausgesetzt wurde, so daß das Eiweiß erst beim Braten oder Grillen koaguliert und dadurch der Speck an den Würstchen haftet. Ein neues Verfahren zur Speckvorbereitung ist angegeben.

## Beschreibung

Die Erfindung bezieht sich auf ein Verfahren zum Herstellen von zum Braten und/oder bzw. Grillen geeigneten Würstchen mit Speckmantel, insbesondere "Berner Würstchen", bei dem die aus in Wursthüllen eingefülltem Brät bestehenden Würstchen nach einer Vorbehandlung durch Räuchern, Erhitzung und Abkühlung einzeln mit in Streifen oder Scheiben geschnittenem, vorbehandeltem Speck umwickelt werden.

Bei den bisher eingesetzten Verfahren werden als Wursthüllen Schafnaturdärme oder Hautfaserdärme verwendet, die am Würstchen verbleiben, so daß der Speck der Umwicklung an ihnen anliegt. Für die Umwicklung wird gekochter heiß geräucherter oder halb gegarter Bauchspeck verwendet. In der Praxis ergibt sich eine aufwendige Herstellung, wobei am Produkt selbst verschiedene Unzukömmlichkeiten auftreten. Die verwendeten Wursthüllen zeigen den Nachteil eines erhöhten Kauwiderstandes beim Genuß und neigen beim Brat- und Grillvorgang zum Platzen. Die Enden der Würstchen mit den geschlossenen Wursthüllen ragen meist aus dem Speckmantel heraus, was den optischen Gesamteindruck und auch den Geschmackseindruck der Endbereiche der Würstchen beim Verzehr beeinträchtigt. Der vorgekochte oder in anderer Form halbgegarte Bauchspeck hat eine geringe Eigenfestigkeit und muß daher relativ dick in Scheiben geschnitten werden, wobei die mögliche Dicke dieser Scheiben über 2 mm beträgt. Der Speck haftet auch nicht ausreichend an den Würstchen, wobei die Haut zur Erzielung einer ausreichenden Haftung ein weiteres Hindernis darstellt. Wegen der Heißbehandlung, z. B. bei einer Kammertemperatur von 80° C, verliert der Speck eine ausreichende Geschmeidigkeit.

Aufgabe der Erfindung ist die Schaffung eines Verfahrens, das die aufgezeigten Nachteile beseitigt, die Produktion vereinfacht und verbilligt und überdies die Lagerfähigkeit, Formhaltigkeit und die geschmacklichen Gesamteindruck der Würstchen beim Verzehr verbessert.

Die gestellte Aufgabe wird prinzipiell dadurch gelöst, daß die Wursthülle nach der die Würstchen in ihrer Form stabilisierenden Vorbehandlung aber vor dem Umwickeln entfernt und für die Umwicklung Speck verwendet wird, der bei seiner Vorbehandlung z. B. mit Salzlake bzw. durch Tumbeln und Räuchern nur unter der Koagulationstemperatur des Eiweißes liegenden Temperaturen, insbesondere Temperaturen unter 40° C ausgesetzt wurde, so daß das Eiweiß erst beim Braten oder Grillen koaguliert und dadurch der Speck an den Würstchen haftet.

Durch das erfindungsgemäße Verfahren werden nicht nur die erwähnten Nachteile der am Würstchen verbleibenden Naturdärme bzw. Hautfaserdärme beseitigt, sondern es ergibt sich auch die Möglichkeit, kostengünstige Wursthüllen, die sich leicht entfernen lassen, einzusetzen, beispielsweise können rauchdurchlässige darmfreie Wursthüllen z. B. aus Cellophan verwendet werden. In der Technik sind noch verschiedene andere kostengünstig herstellbare und leicht ablösbare Wursthüllen, z. B. aus der DE 34 37 026 C und der DE 44 38 961 bekannt, die allenfalls in modifizierter Form ebenfalls zum Einsatz gelangen können. Die Verwendung solcher Wursthüllen erleichtert eine allfällige Mechanisierung des Abschälvorganges. Der verwendete Speck ist im Vergleich zu vorgekochtem oder vorgegartem Speck wesentlich geschmeidiger und kann wesentlich dünner geschnitten werden. Daraus und wegen der Garung auch des Speckes erst beim Grill- oder Bratvorgang ergibt sich ein verbesserter Gesamtgeschmack. Da der Speck am Würstchen haftet, wird auch das bisher auftretende, unerwünschte Ablösen des Speckmantels vermieden. Ja nach Geschmacksrichtung kann eine dickere Speckschicht selbstverständlich auch durch zwei- oder mehrfache Umwicklung erhalten werden. Wenn die Konsumenten Würstchen mit Käsezusatz bevorzugen, kann dieser Käse nicht nur dem Brät beigegeben, sondern auch in Form von Streifen auf das Würstchen aufgelegt und mit dem Speckmantel festgehalten werden.

Eine Weiterbildung der Erfindung betrifft ein Verfahren zur Herstellung von für die Umwicklung verwendbaren Speck, welche sich dadurch auszeichnet, daß Schweinebauch entbeint, zugeschnitten, mit Salzlake injiziert, getumbelt und bei einer Kammertemperatur unter 48° C, insbesondere etwa 40° C für einige, z. B. für 5 bis 6 Stunden kalt geräuchert, anschließend durch Einpressen in Formen und Lagerung in der Form bei Kühltemperaturen unter - 10° C gelagert und nach der Entnahme aus der Form auf einer Kerntemperatur unter dem Gefrierpunkt, z. B. bei - 5 bis - 8° C gehalten wird, so daß er in diesem Zustand in Scheiben oder Streifen unter 2 mm Dicke, vorzugsweise 1,2 bis 1 mm Dicke zur Bildung der Umwicklung geschnitten werden kann.

Der so hergestellte Speck ist geschmeidig und hat eine höhere Stabilität, sowie verbesserte Haftung am Würstchen. Die Möglichkeit, den Speck in sehr dünne Scheiben bzw. Streifen zu schneiden und auch die besondere Konsistenz des auf diese Weise erhaltenen Specks eröffnet zusätzliche Verwendungsmöglichkeiten in der Küche, z. B. als Speckhülle oder Auflage für mageres Geflügel. Für andere Verwendungen ist es auch möglich, den Speck etwas dicker zu schneiden und z. B. als Bratspeck zu verwenden.

In Weiterbildung des Herstellungsverfahrens für die Speckerzeugung wird vorgesehen, daß als Preßformen in ihrer Grundform rechteckig-prismatische Wannen mit in die Wannenöffnung passenden Einsatzteilen, insbesondere Einsatzdeckel verwendet werden, welch letztere für die Auflage auf den in die Wanne eingelegten, zugeschnittenen Schweinebauch bestimmt sind, wobei für die Stapelung der beschickten Wannen in einer Presse die gegebenenfalls durch Einlagen zusätzlich einstellbare, wirksame Höhe der Einsatzteile so gewählt ist, daß sie bei jeder vorkommenden Dicke eines eingelegten zugeschnittenen Schweinebauches auch nach dem Preßvorgang über den oberen Wannenrand vorstehen und den Preßdruck von der jeweils aufgesetzten Wanne auf das Preßgut der unteren Wanne übertragen.

Durch Anwendung dieses Verfahrensschrittes fällt der fertige Speck in gleichmäßigen, etwa ziegelartigen Formen an und benötigt keinen Randzuschnitt mehr. Durch die gleichmäßige Pressung werden auch die Konsistenz und auch der Geschmack verbessert.

## Patentansprüche

1. Verfahren zum Herstellen von zum Braten und/oder bzw. Grillen geeigneten Würstchen mit Speckmantel, insbesondere "Berner Würstchen", bei dem die aus in Wursthüllen eingefülltem Brät bestehenden Würstchen nach einer Vorbehandlung durch Räuchern, Erhitzung und Abkühlung einzeln mit in Streifen oder Scheiben geschnittenem, vorbehandeltem Speck umwickelt werden, **dadurch gekennzeichnet, daß** die Wursthülle nach der die Würstchen in ihrer Form stabilisierenden Vorbehandlung aber vor dem Umwickeln entfernt und für die Umwicklung Speck verwendet wird, der bei seiner Vorbehandlung z. B. mit Salzlake bzw. durch Tumbeln und Räuchern nur unter der Koagulationstemperatur des Eiweißes liegenden Temperaturen, insbesondere Temperaturen unter 40° C ausgesetzt wurde, so daß das Eiweiß erst beim Braten oder Grillen koaguliert und **dadurch** der Speck an den Würstchen haftet.

2. Verfahren nach Anspruch 1, **dadurch gekennzeichnet, daß** rauchdurchlässige Wursthüllen z. B. aus Cellophan verwendet werden.

3. Verfahren zur Herstellung von bei dem Verfahren nach Anspruch 1 oder 2 für die Umwicklung verwendbaren Speck, **dadurch gekennzeichnet, daß** Schweinebauch entbeint, zugeschnitten, mit Salzlake injiziert, getumbelt und bei einer Kammertemperatur unter 48° C, insbesondere etwa 40° C für einige, z. B. für 5 bis 6 Stunden kalt geräuchert, anschließend durch Einpressen in Formen und Lagerung in der Form bei Kühltemperaturen unter - 10° C gelagert und nach der Entnahme aus der Form auf einer Kerntemperatur unter dem Gefrierpunkt, z. B. bei - 5 bis - 8° C gehalten wird, so daß er in diesem Zustand in Scheiben oder Streifen unter 2 mm Dicke, vorzugsweise 1,2 bis 1 mm Dicke zur Bildung der Umwicklung geschnitten werden kann.

4. Verfahren nach Anspruch 3, **dadurch gekennzeichnet, daß** als Preßformen in ihrer Grundform rechteckig-prismatische Wannen mit in die Wannenöffnung passenden Einsatzteilen, insbesondere Einsatzdeckel verwendet werden, welch letztere für die Auflage auf den in die Wanne eingelegten, zugeschnittenen Schweinebauch bestimmt sind, wobei für die Stapelung der beschickten Wannen in einer Presse die gegebenenfalls durch Einlagen zusätzlich einstellbare, wirksame Höhe der Einsatzteile so gewählt ist, daß sie bei jeder vorkommenden Dicke eines eingelegten zugeschnittenen Schweinebauches auch nach dem Preßvorgang über den oberen Wannenrand vorstehen und den Preßdruck von der jeweils aufgesetzten Wanne auf das Preßgut der unteren Wanne übertragen.
